# EUROPEAN PATENT SPECIFICATION

(11) **EP 2 922 250 B1**
(45) Date of publication and mention of the grant of the patent: **15.05.2019**
(21) Application number: 13855057.9
(22) Date of filing: 14.11.2013
(51) Int. Cl.: H04L 12/717, H04L 12/24, H04L 12/751

(54) **CONTROL APPARATUS, COMMUNICATION SYSTEM, CONTROL INFORMATION CREATING METHOD AND PROGRAM**
STEUERUNGSVORRICHTUNG, KOMMUNIKATIONSSYSTEM, STEUERUNGSINFORMATIONSERZEUGUNGSVERFAHREN UND -PROGRAMM
APPAREIL DE COMMANDE, SYSTÈME DE COMMUNICATION, PROCÉDÉ DE CRÉATION D'INFORMATIONS DE COMMANDE ET PROGRAMME ASSOCIÉ

(30) Priority: 15.11.2012 JP 2012250888
(43) Date of publication of application: 23.09.2015
(73) Proprietor: NEC Corporation, Tokyo 108-8001 (JP)
(72) Inventor: SUZUKI, Kazuya, Tokyo 108-8001 (JP)
(74) Representative: Reeve, Nicholas Edward
(86) International application number: PCT/JP2013/080760
(87) International publication number: WO 2014/077306

(56) References cited:
- WO-A1-2012/049807
- WO-A1-2012/049807
- JP-A- H05 199 230
- US-A- 5 434 863
- TAKESHI KODAMA ET AL: 'EVALUATION OF THE CONTROL-FOWARDING SEPARATED ROUTER' IEICE TECHNICAL REPORT vol. 103, no. 310, 12 September 2003, pages 39 - 43, XP008179240

## Description

### Technical Field

The present invention relates to a control apparatus, a communication system, a control information creation method, and a program. In particular, it relates to: a control apparatus that controls communication by setting control information in controlled communication nodes; a communication system; a control information creation method; and a program.

### Background

OpenFlow has drawn attention as basic technology for realizing software-defined networks (SDNs) (see the papers by Nick McKeown, and seven others, entitled "OpenFlow: Enabling Innovation in Campus Networks," [online], [searched on October 24, 2012], Internet URL:http://www.openflow.org/documents/openflow-wp-latest.pdf, and the "OpenFlow Switch Specification" Version 1.1.0 Implemented (Wire Protocol 0x02), [online], [searched on October 24, 2012], Internet URL: http://www.openflow.org/documents/openflow-spec-v1.1.0.pdf

OpenFlow recognizes communications as end-to-end flows and performs route control, failure recovery, load balancing, and optimization on a per-flow basis. Each OpenFlow switch according to the "OpenFlow Switch Specification" has a secure channel for communication with an OpenFlow controller and operates according to a flow table suitably added or rewritten by the OpenFlow controller. In the flow table, a set of the following three is defined for each flow: match conditions (Match Fields) against which a packet header is matched; flow statistical information (Counters); and instructions that define at least one processing content (see 4.1 "Flow Table" in the "OpenFlow Switch Specification" .

For example, when an OpenFlow switch receives a packet, the OpenFlow switch searches the flow table for an entry having a match condition that matches header information of the received packet (see 4.3 "Match Fields" in the "OpenFlow Switch Specification"). If, as a result of the search, the OpenFlow switch finds an entry that matches the received packet, the OpenFlow switch updates the flow statistical information (Counters) and processes the received packet on the basis of a processing content(s) (packet transmission from a specified port, flooding, dropping, etc.) written in the Instructions field of the entry. If, as a result of the search, the OpenFlow switch does not find an entry that matches the received packet, the OpenFlow switch transmits an entry setting request to the OpenFlow controller via the secure channel. Namely, the OpenFlow switch requests the OpenFlow controller to transmit control information for processing the received packet (Packet-In message). The OpenFlow switch receives a flow entry that defines a processing content(s) and updates the flow table. In this way, by using an entry stored in the flow table as control information, the OpenFlow switch performs packet forwarding.

If a centralized-control-type network using OpenFlow according to the above mentioned "OpenFlow: Enabling Innovation in Campus Networks" and "OpenFlow Switch Specification" papers is connected to an Internet-Protocol- (IP-) based network, a user packet received by a switch controlled in the OpenFlow network needs to be forwarded to an appropriate neighbouring router. However, to appropriately forward the packet, a control apparatus (for example, an OpenFlow controller) needs to acquire route information from a neighbouring router(s) or the like, calculate a path(s) on the basis of the content of the path information, and set control information for instructing packet(s) forwarding in relevant communication nodes controlled in the OpenFlow network.

If a centralized-control-type network is connected to many external networks as described above, the number of destinations that need to be reflected on flow entries is increased. Thus, there is a problem that the load on the control apparatus is increased.

WO2012/049807 describes a communication system having a control device for setting processing rules for implementing a packet forwarding path on the communication nodes in the network.

US5,434,863, describes an internetworking apparatus comprising a router manager and a plurality of router accelerator modules.

We have appreciated that it would be desirable to provide a control apparatus, a communication system, a control information creation method, and a program that contribute to reducing the load for creating control information and improving the ability of creating the control information in a case where a centralized-control-type network as typified by an OpenFlow network in the "OpenFlow: Enabling Innovation in Campus Networks" and "OpenFlow Switch Specification" papers is connected to an existing network.

### SUMMARY OF THE INVENTION

The invention is defined in the independent claims to which reference should now be made. Advantageous features are set forth in the dependent claims.

The meritorious effects of the present invention are summarized as follows. The present invention can contribute to reducing the load for creating control information and improving the ability of creating the control information in a case where a centralized-control-type network is connected to an existing network.

### BRIEF DESCRIPTION OF THE DRAWINGS

Fig. 1 illustrates a configuration according to an exemplary embodiment of the present invention.
Fig. 2 illustrates a configuration of a control apparatus according to a first exemplary embodiment of the present invention.
Fig. 3 illustrates exemplary route information stored in the control apparatus according to the first exemplary embodiment of the present invention.
Fig. 4 illustrates an operation of the control apparatus according to the first exemplary embodiment of the present invention.
Fig. 5 illustrates an exemplary address resolution table stored in the control apparatus according to the first exemplary embodiment of the present invention.
Fig. 6 illustrates a shortest path tree used in the first exemplary embodiment of the present invention.
Fig. 7 illustrates an exemplary interface table stored in the control apparatus according to the first exemplary embodiment of the present invention.
Fig. 8 is a flowchart illustrating an operation of the control apparatus according to the first exemplary embodiment of the present invention.
Fig. 9 illustrates an operation of the control apparatus according to the first exemplary embodiment of the present invention.
Fig. 10 illustrates an operation of the control apparatus according to the first exemplary embodiment of the present invention.
Fig. 11 illustrates a configuration of a control apparatus according to a second exemplary embodiment of the present invention.
Fig. 12 is a diagram illustrating allocation of path calculation units and a shortest path tree according to the second exemplary embodiment of the present invention.
Fig. 13 is another diagram illustrating allocation of path calculation units and a shortest path tree according to the second exemplary embodiment of the present invention.
Fig. 14 is a flowchart illustrating an operation of the control apparatus according to the second exemplary embodiment of the present invention.
Fig. 15 illustrates exemplary route information stored in a control apparatus according to a third exemplary embodiment of the present invention.
Fig. 16 is a flowchart illustrating an operation of the control apparatus according to the third exemplary embodiment of the present invention.

### DETAILED DESCRIPTION OF EXAMPLE EMBODIMENTS

First, an outline of an exemplary embodiment of the present invention will be described with reference to the drawings. In the following outline, various components are denoted by reference characters for the sake of convenience. Namely, the following reference characters are merely used as examples to facilitate understanding of the present invention, not to limit the present invention to the illustrated modes.

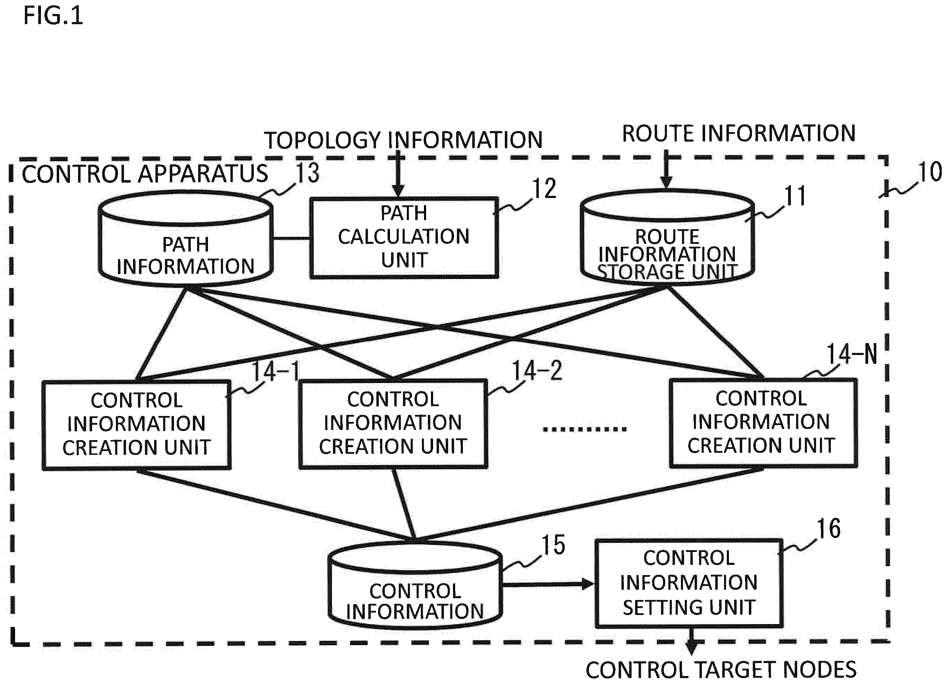

As illustrated in Fig. 1, an exemplary embodiment of the present invention can be realized by a configuration including: a route information storage unit 11 configured to store information for obtaining a neighbouring router(s) set as a next hop(s) for a destination; a path calculation unit 12 configured to calculate a path(s) between arbitrary control target nodes on the basis of a network topology (topology information) configured by a plurality of control target nodes; and control information creation units 14-1 to 14-N configured to create control information set in the plurality of control target nodes.

More specifically, individual one of the N control information creation units 14-1 to 14-N obtains a destination from the route information storage unit 11 and determines that the destination is allocated to itself and creates control information for causing at least one control target node on a path(s) to forward packets the neighbouring router(s) by using a path(s) calculated by the path calculation unit 12. While, in the example in Fig. 1, a control information setting unit 16 sets the control information created by the control information creation units 14-1 to 14-N in relevant control target nodes, another apparatus other than the control apparatus 10 may be allowed to perform control information setting processing.

In accordance with the above configuration, load balancing for creating control information can be achieved by the N control information creation units. In this way, it is possible to reduce the load required for creating control information in a case where a centralized-control-type network and an existing network are connected to each other. Namely, it is possible to improve the ability of creating the control information.

### First exemplary embodiment

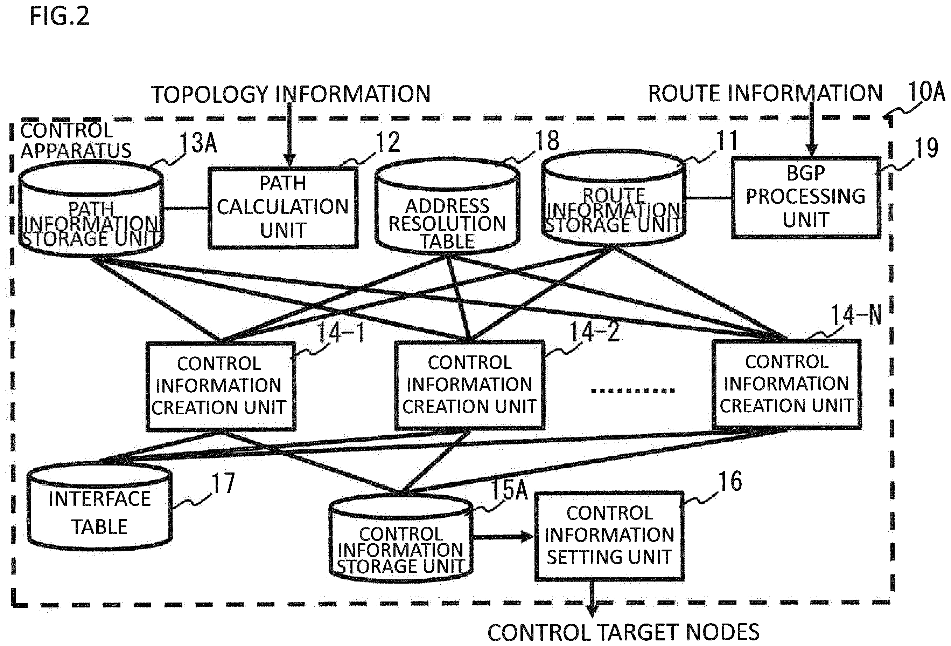

Next, a first exemplary embodiment of the present invention will be described in detail with reference to the drawings. Fig. 2 illustrates a configuration of a control apparatus according to the first exemplary embodiment of the present invention. As illustrated in Fig. 2, the configuration includes: a route information storage unit 11, a path calculation unit 12, a path information storage unit 13A, N control information creation units 14-1 to 14-N, a control information storage unit 15A, a control information setting unit 16, an interface table 17, an address resolution table 18, and a BGP processing unit 19.

By using the border gateway protocol (BGP), the BGP processing unit 19 acquires route information from other neighbouring routers and stores the acquired route information in the route information storage unit 11.

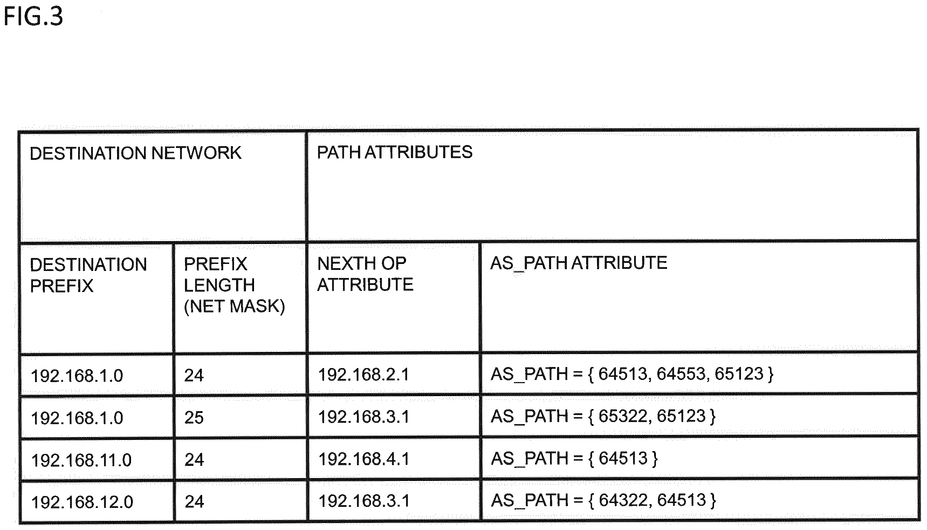

Fig. 3 illustrates exemplary route information stored in the route information storage unit 11. Fig. 3 illustrates route information entries, in each of which destination network information including a destination prefix (address prefix) and a prefix length and path attributes are associated with each other. In Fig. 3, a nexthop attribute indicates an IP address of a neighbouring router that is set as a next hop toward a destination address. In addition, an AS_PATH attribute indicates at least one autonomous system (AS) used from an autonomous system (AS) as a source of route information to a neighbouring router that has transmitted the route information. While a nexthop attribute and an AS_PATH attribute are stored as the path attributes in the example in Fig. 3, other path attributes defined in RFC1771, RFC1997, RFC2796, etc. or vendor-defined path attributes (for example, "Weight" of Cisco Systems, Inc.) may be included.

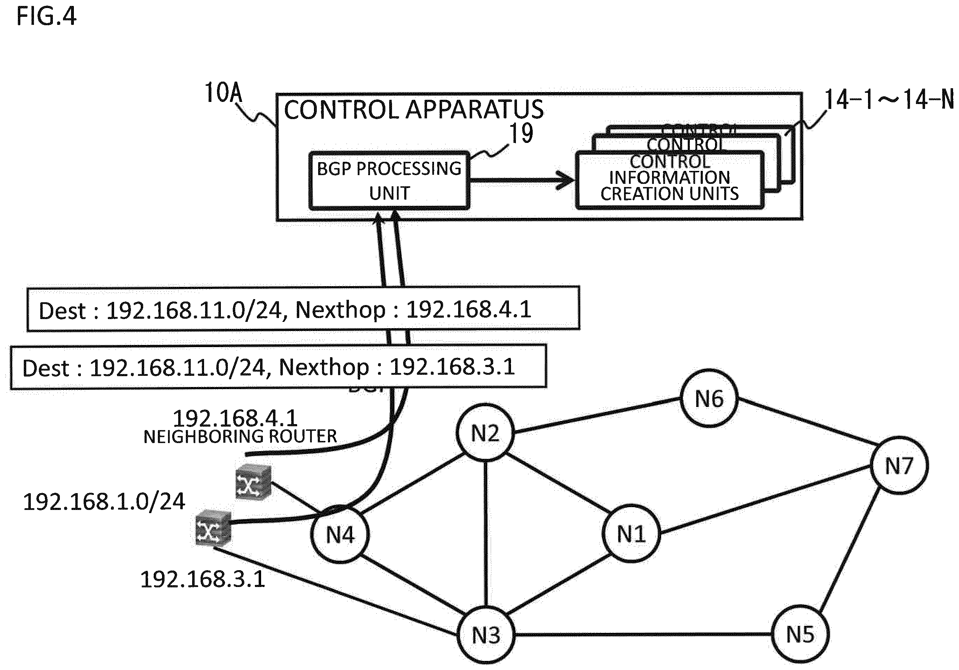

For example, as illustrated in Fig. 4, when receiving route information indicating the same destination from a plurality of neighbouring routers, the control apparatus refers to the path attributes including the AS_PATH attribute to select a route (next hop) to be used. In the example in Fig. 4, the control apparatus has received two items of path information: one indicating 192.168.11.0/24 as the destination network information and 192.168.4.1 as the next hop and the other indicating 192.168.11.0/24 as the destination network information and 192.168.3.1 as the next hop. In such case, by using a predetermined best path selection algorithm, on the basis of "Weight," the number of ASs used, or the like, a route stored in the route information storage unit 11 is selected. In the present exemplary embodiment, the control apparatus 10A includes the BGP processing unit 19 for autonomously collecting route information from neighbouring router(s). However, alternatively, a network administrator may set route information illustrated as an example in Fig. 3.

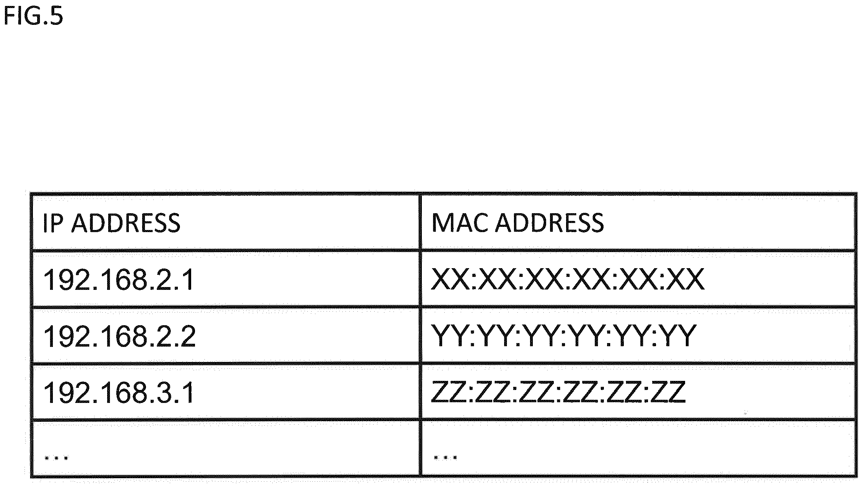

Fig. 5 illustrates entries stored in the address resolution table 18. The address resolution table 18 is configured in the same way as a so-called address resolution protocol (ARP) table including at least one entry in which an IP address and a MAC address are associated with each other. The control information creation units 14-1 to 14-N refer to the address resolution table 18 when resolving a MAC address associated with an IP address specified as a destination. The control apparatus 10A may collect these entries stored in the address resolution table 18 by using ARP or a network administrator may manually set these entries.

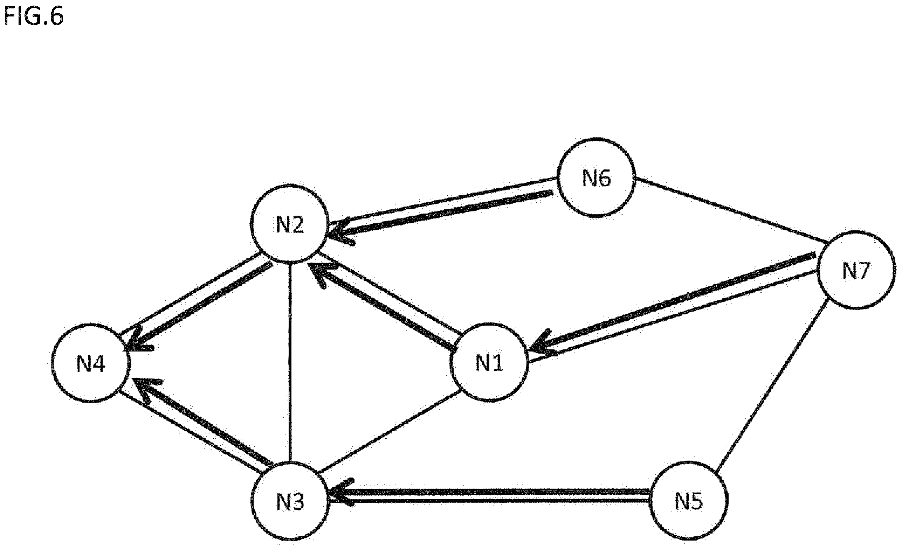

The path calculation unit 12 refers to a network topology configured by communication nodes as control targets (control target nodes) and calculates shortest path(s) between control target nodes to which neighbouring routers, terminals, etc. could be connected. Fig. 6 illustrates a shortest path tree calculated by the path calculation unit 12 in which a control target node N4 is set as a sink (end point).

Each shortest path in the shortest path tree calculated by the path calculation unit 12 is stored in the path information storage unit 13A. For example, in the case of Fig. 6, a control target node N1 alone is a core node that is not connected to any neighbouring routers, terminals, etc. Thus, the path calculation unit 12 calculates a shortest path tree(s) in which the control target nodes N2 to N7 are set as sinks, respectively. Of course, if there is a combination(s) of control target nodes or a path(s) on which relevant communication cannot be performed, path calculation may be omitted for such portion(s).

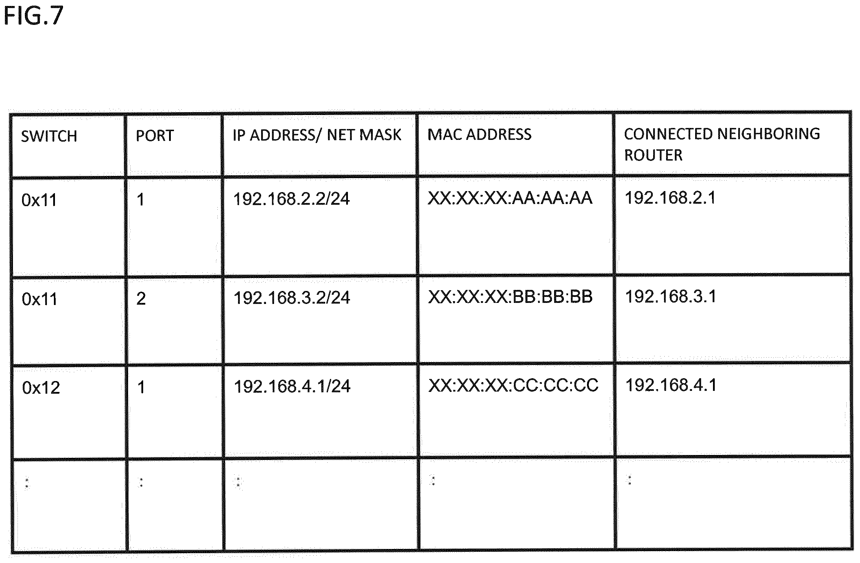

Fig. 7 illustrates entries stored in the interface table 17. The interface table 17 is a table for storing at least one entry in which an IP address and a MAC address are allocated to a port of a control target node (switch), the port being connected to a neighbouring router. Each of the control information creation units 14-1 to 14-N refers to the IP and MAC addresses stored in the interface table 17 when generating control information for causing a control target node connected to a neighbouring router to rewrite the header of a packet that is transmitted to the neighbouring router. The control apparatus 10A may set these entries stored in the interface table 17 on the basis of a predetermined allocation rule or a network administrator may manually set these entries.

A neighbouring router(s) is allocated to each of the control information creation units 14-1 to 14-N by using the IP address(es) of the neighbouring router(s). When one of the control information creation units 14-1 to 14-N refers to the route information stored in the route information storage unit 11 and determines that the neighbouring router associated with the target destination is a neighbouring router allocated to itself, this control information creation unit acquires a shortest path tree, in which a control target node connected to this neighbouring router is set as a sink, from the path information storage unit 13A. Next, the control information creation unit creates items of control information for causing relevant control target nodes to forward relevant packets in accordance with each shortest path in the shortest path tree and stores the created control information in the control information storage unit 15A. Information about the destination in the route information and other information for identifying a corresponding neighbouring router are set as match conditions in each of these items of control information. In this way, each control target node on a shortest path can identify packets to be transmitted to a corresponding neighbouring router.

Each unit (processing means) of the control apparatus 10A illustrated in Fig. 2 can be realized by a computer program which causes a computer that constitutes the control apparatus 10A to use its hardware and execute the above processing.

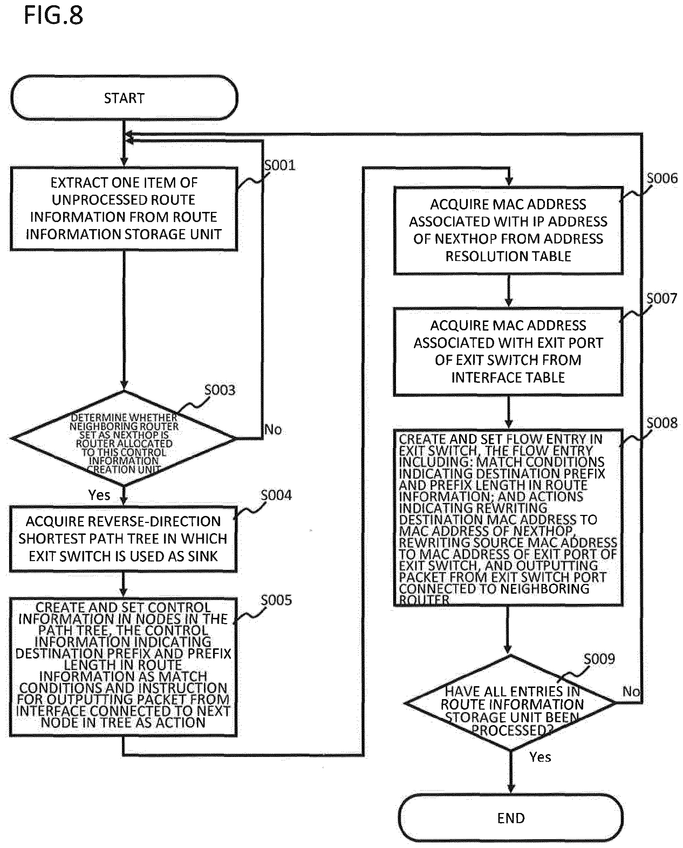

Next, an operation according to the first exemplary embodiment of the present invention will be described in detail with reference to the drawings. Fig. 8 is a flowchart illustrating an operation of the control apparatus according to the first exemplary embodiment of the present invention. As illustrated in Fig. 8, first, one (herein, the control information creation unit 14-1) of the control information creation units 14-1 to 14-N extracts one item of route information from the route information storage unit 11 (step S001).

Next, the control information creation unit 14-1 determines whether the neighbouring router set in the path attribute (NEXTHOP attribute) in the extracted route information is a neighbouring router that is allocated to this control information creation unit 14-1 (step S003). If the route information extracted in step S001 indicates a router that is not allocated to the control information creation unit 14-1, the processing returns to step S001 and the control information creation unit 14-1 reads the next item of route information (No in step S003).

If the neighbouring router set in the path attribute (NEXTHOP attribute) in the extracted route information is a neighbouring router that is allocated to the control information creation unit 14-1 (Yes in step S003), the control information creation unit 14-1 acquires a reverse-direction shortest path tree, in which the control target node (exit switch) connected to the neighbouring router specified in the route information is set as a sink, from the path information storage unit 13A (step S004).

Next, the control information creation unit 14-1 creates control information for causing the control target nodes on the paths in the acquired shortest path tree to forward packets addressed to the destination specified in the route information in accordance with the respective paths (step S005). More specifically, the control information creation unit 14-1 creates control information in which the destination prefix and the prefix length in the route information are set as match conditions and an instruction for outputting packets from an interface connected to the next control target node on the corresponding path is set as an action. The control information setting unit 16 sets the created control information in the relevant control target nodes.

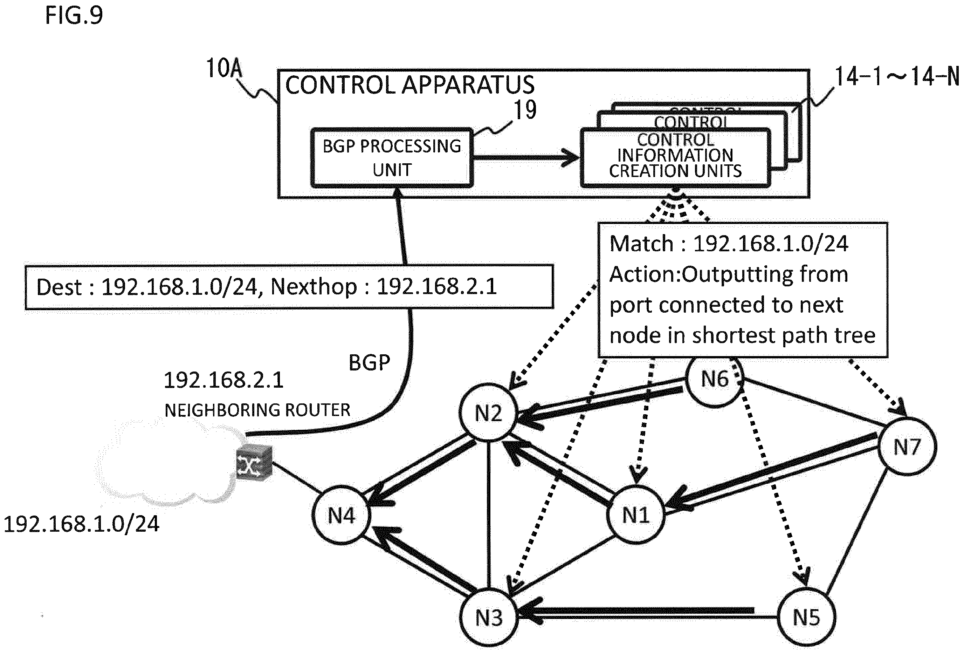

Fig. 9 illustrates the operation of the control information creation unit in step S005. The following description will be made, assuming that the BGP processing unit 19 has received route information indicating that the destination is 192.168.1.0/24 and the IP address of the neighbouring router set as the next hop is 192.168.2.1 and that the control information creation unit 14-1 has determined that the neighbouring router is a neighbouring router allocated to itself. In this example, the control information creation unit 14-1 acquires a shortest path tree in which the control target node N4 connected to the neighbouring router 192.168.2.1 is set as the sink (see arrows in Fig. 9). Next, the control information creation unit 14-1 sets control information in each of the control target nodes on the arrows in Fig. 9. In each item of control information, the destination "192.168.1.0/24" is set as a match condition and an instruction for performing packet forwarding as illustrated in a corresponding one of the arrows is set as an action. In this way, when any one of the control target nodes N1 to N7 other than the control target node N4 receives a packet addressed to the destination "192.168.1.0/24," this control target node forwards the packet toward the control target node N4.

In addition, the control information creation unit 14-1 refers to the address resolution table 18 to acquire a MAC address associated with the IP address of the neighbouring router set as the next hop in the route information (step S006).

The control information creation unit 14-1 refers to the interface table 17 to acquire a MAC address of the corresponding exit port of the control target node (exit switch) serving as the sink in the shortest path tree (step S007).

Next, the control information creation unit 14-1 creates control information for causing the control target node (exit switch) serving as the sink in the acquired shortest path tree to rewrite the MAC address, regarding packets addressed to the destination specified in the route information (step S008). More specifically, the control information creation unit 14-1 creates control information including: match conditions indicating the destination prefix and the prefix length in the route information; and actions indicating rewriting the destination MAC address to the MAC address of the neighbouring router acquired in step S006, rewriting the source MAC address to the MAC address of the exit port of the exit switch acquired in step S007, and outputting packets from the exit switch port. The control information setting unit 16 sets the created control information in the control target node (exit switch) serving as the sink in the acquired shortest path tree.

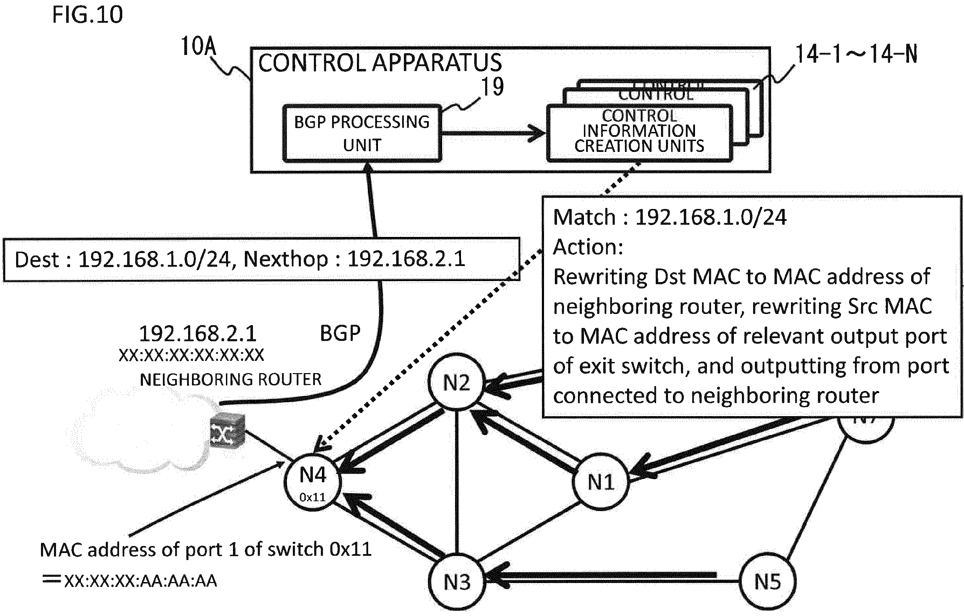

Fig. 10 illustrates an operation of the control information creation unit in the above step S008. For example, assuming that the control apparatus 10A has acquired XX:XX:XX:AA:AA:AA as the MAC address of the neighbouring router in step S006 and XX:XX:XX:XX:XX:XX as the MAC address of the port of the control target node (exit switch) serving as the sink in the shortest path tree in step S007, the port being connected to the neighbouring router, the control information creation unit 14-1 sets control information for rewriting the destination MAC address in the header of a packet indicating 192.168.1.0/24 as the destination to XX:XX:XX:AA:AA:AA and rewriting the source MAC address to XX:XX:XX:XX:XX:XX. In this way, when receiving this packet, the destination can appropriately specify the destination of a response packet.

Next, the control information creation unit 14-1 determines whether the setting of control information has been completed for all the necessary entries stored in the route information storage unit 11 (step S009). If, as a result of the determination, all the entries have not been processed (No in step S009), the processing returns to step S001 and the control information creation unit 14-1 extracts one item of unprocessed route information.

In contrast, if all the entries have been processed (Yes in step S009), the control information creation unit 14-1 ends the processing. While the operation of only the control information creation unit 14-1 is described in the above example, other control information creation units 14-2 to 14-N operate in the same way.

In this way, by causing each of the control information creation units 14-1 to 14-N to set control information regarding a neighbouring router(s) allocated to itself, the setting for forwarding packets to a neighbouring router(s) connected to the network configured by the control target nodes N1 to N7 is completed.

As is clear from the above description, according to the present exemplary embodiment, load balancing for generating control information can be achieved by the plurality of control information creation units 14-1 to 14-N.

### Second exemplary embodiment

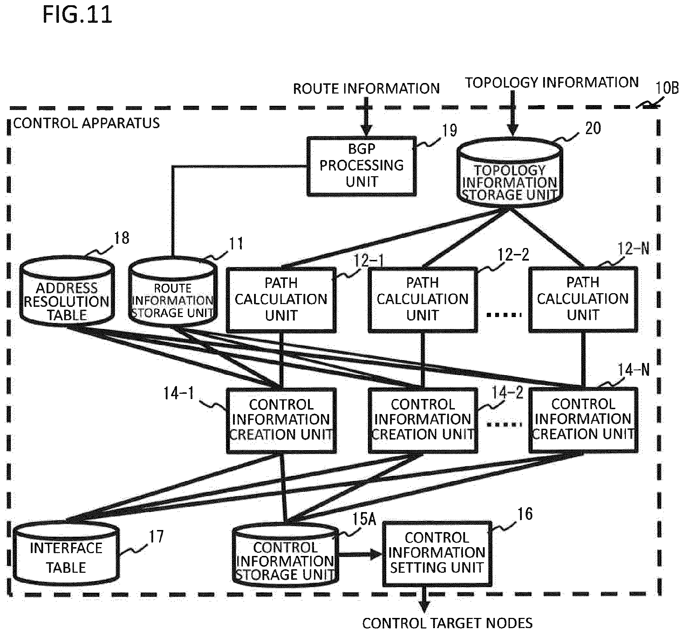

Next, a second exemplary embodiment of the present invention will be described in detail with reference to the drawings. In the second exemplary embodiment, load balancing can also be achieved by a plurality of path calculation units 12. Fig. 11 illustrates a configuration of a control apparatus 10B according to the second exemplary embodiment of the present invention. The second exemplary embodiment differs from the first exemplary embodiment illustrated in Fig. 2 in that a plurality of path calculation units are arranged for the control information creation units, respectively, and that a topology information storage unit 20 for storing topology information is added. Since other components are the same as those according to the first exemplary embodiment, the following description will be made with a focus on the differences from the first exemplary embodiment.

The topology information storage unit 20 stores a network topology configured by controlled communication nodes (control target nodes).

N path calculation units (12-1 to 12-N) according to the present exemplary embodiment are arranged for the control information creation units (14-1 to 14-N), respectively.

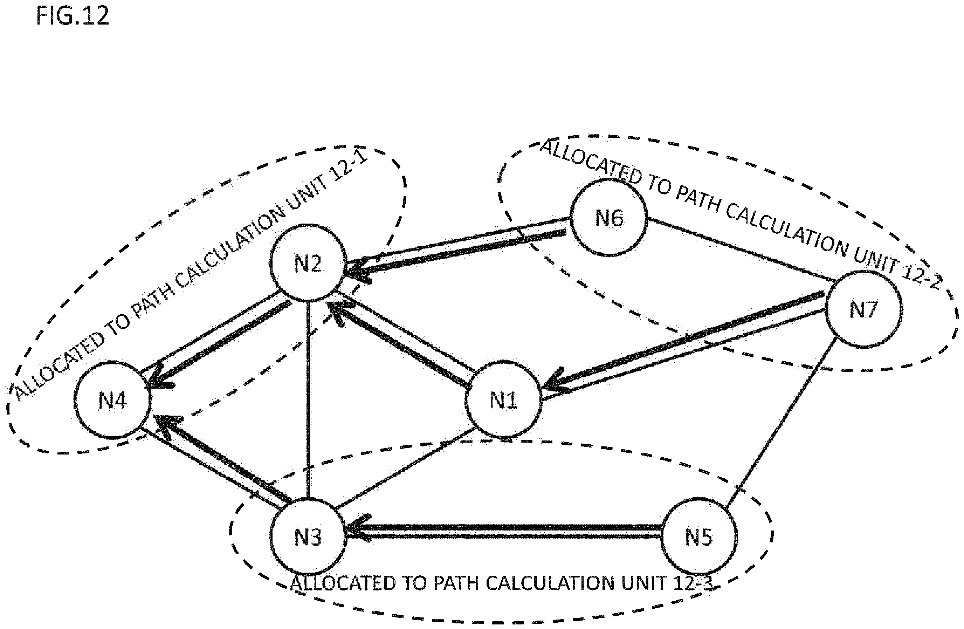

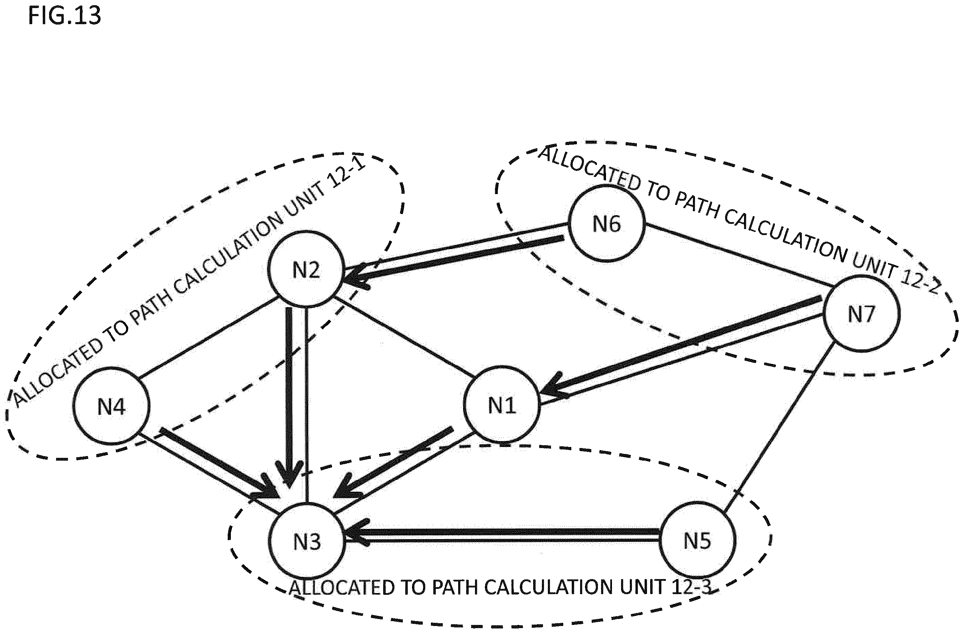

Figs. 12 and 13 illustrate exemplary allocation of the control target nodes N2 to N7 to the path calculation units 12-1 to 12-N (Figs. 12 and 13 show N=3 case) and shortest path trees created by each of the path calculation units 12-1 to 12-N. In the example in Fig. 12, the control target nodes N2 and N4 are allocated to the path calculation unit 12-1. In this case, the path calculation unit 12-1 calculates a shortest path tree in which the control target node N4 illustrated in Fig. 12 is set as the sink. The path calculation unit 12-1 also calculates a shortest path tree(s) in which the control target node N2 is set as the sink (not illustrated).

In the example in Fig. 13, the control target nodes N3 and N5 are allocated to the path calculation unit 12-2. In this case, the path calculation unit 12-2 calculates a shortest path tree in which the control target node N3 illustrated in Fig. 13 is set as the sink. The path calculation unit 12-1 also calculates a shortest path tree in which the control target node N5 is set as the sink (not illustrated). Likewise, the control target nodes N6 and N7 are allocated to the path calculation unit 12-3. The path calculation unit 12-3 calculates shortest path trees in which the control target nodes N6 and N7 are set as the sinks, respectively.

When any one of the control information creation units 14-1 to 14-N according to the present exemplary embodiment refers to the route information stored in the route information storage unit 11 and determines that the control target node (exit switch) connected to the neighbouring router associated to the destination is a control target node allocated to this control information creation unit, the control information creation unit acquires a shortest path tree in which the control target node connected to the neighbouring router is set as the sink from an associated one of the path information calculation units 12-1 to 12N. Next, the control information creation unit creates control information for causing relevant control target nodes to forward relevant packets in accordance with each shortest path in the shortest path tree and stores the created control information in the control information storage unit 15A.

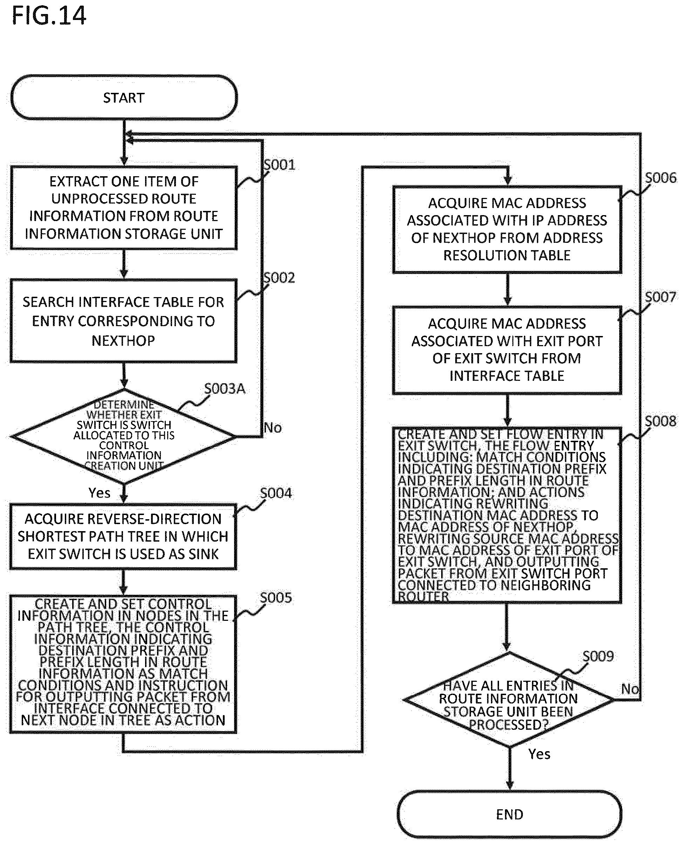

Next, an operation according to the second exemplary embodiment of the present invention will be described in detail with reference to the drawings. Fig. 14 is a flowchart illustrating an operation of the control apparatus according to the second exemplary embodiment of the present invention. This operation differs from the operation according to the first exemplary embodiment illustrated in Fig. 8 in that any one of the control information creation units 14-1 to 14-N reads information about the control target node (exit switch) connected to the neighbouring router from an entry corresponding to the next hop in the interface table 17 in step S002 and determines whether the control target node is allocated to this control information creation unit (step S003A). Since other steps are the same as those according to the first exemplary embodiment, description thereof will be omitted.

Thus, according to the present exemplary embodiment, load balancing for path calculation can be achieved.

### Third exemplary embodiment

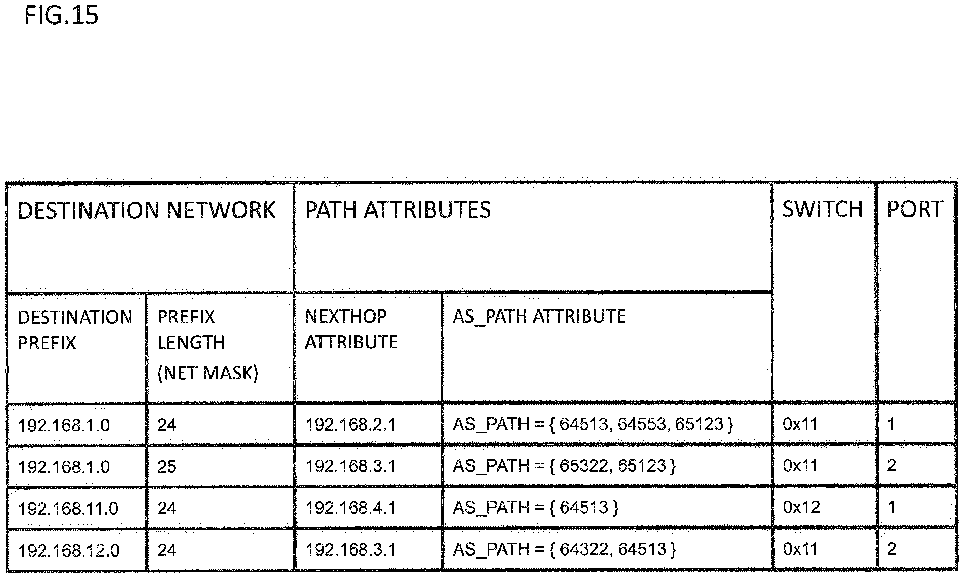

Next, a third exemplary embodiment of the present invention will be described in detail with reference to the drawings. In the third exemplary embodiment, the route information in the control apparatus according to the second exemplary embodiment is modified. Fig. 15 illustrates exemplary route information stored in a control apparatus according to the third exemplary embodiment of the present invention. The route information differs from that according to the first exemplary embodiment illustrated in Fig. 3 in that a control target node (exit switch) connected to a neighbouring router set as a next hop and corresponding port information are previously stored in each entry. Since other components are the same as those according to the second exemplary embodiment, description thereof will be omitted.

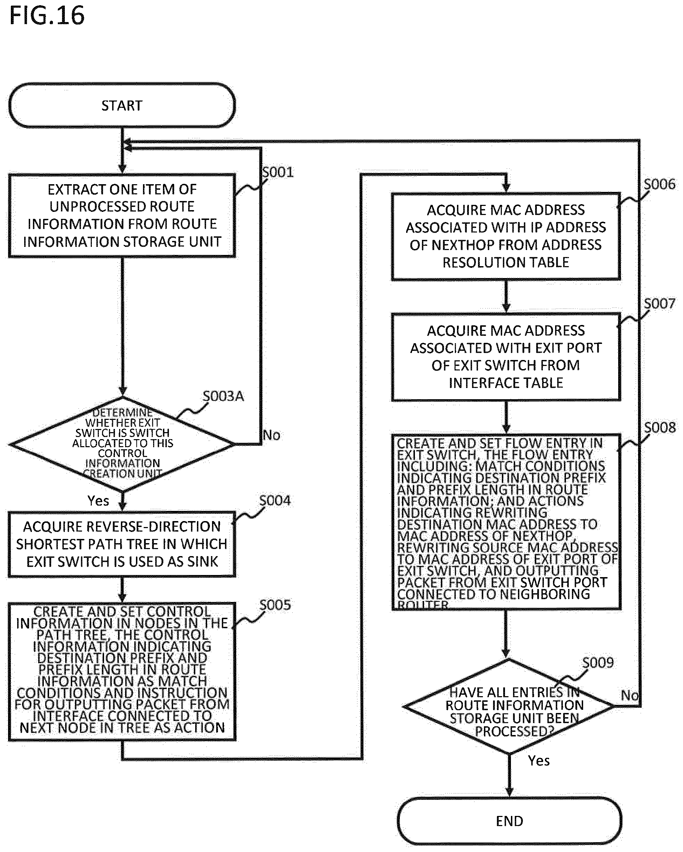

Next, an operation according to the present exemplary embodiment will be described in detail with reference to the drawings. Fig. 16 is a flowchart illustrating an operation of the control apparatus according to the third exemplary embodiment of the present invention. This operation differs from that according to the second exemplary embodiment illustrated in Fig. 14 in that the entry search processing by the interface table 17 in step S002 is omitted. This is because, as described above, a control target node (exit switch) connected to a neighbouring router set as a next hop and corresponding port information are previously stored in each entry in the route information. Since other steps are the same as those according to the second exemplary embodiment, description thereof will be omitted.

As described above, the present invention can also be realized by a mode in which a control target node (exit switch) connected to a neighbouring router set as a next hop and corresponding port information are previously stored in each entry in the route information. Of course, instead of such control target node (exit switch) and corresponding port information, an identifier of a corresponding route information creation unit may previously be stored, for example. In this way, each route information creation unit determines whether route information is directed thereto.

While exemplary embodiments of the present invention have thus been described, the present invention is not limited thereto. Further variations, substitutions, or adjustments can be made without departing from the basic technical concept of the present invention. For example, the configurations of the networks and elements illustrated in the drawings are used only as examples to facilitate understanding of the present invention. Namely, the present invention is not limited to the configurations illustrated in the drawings.

In addition, for example, in the above second and third exemplary embodiments, the path calculation units 12-1 to 12-N are associated with the control information creation units 14-1 to 14-N, respectively. Alternatively, one of the path calculation units 12-1 to 12-N may be associated with a plurality of control information creation units. Still alternatively, a plurality of path calculation units 12-1 to 12-N may be associated with a single control information creation unit.

In addition, in the above exemplary embodiments, the control apparatus includes the BGP processing unit 19 to acquire route information from neighbouring routers. However, the route information may be acquired by using other routing protocols.

### Reference Signs List

10, 10A, 10B control apparatus
11 route information storage unit
12, 12-1 to 12-N path calculation unit
13 path information
13A path information storage unit
14-1 to 14-N control information creation unit
15 control information
15A control information storage unit
16 control information setting unit
17 interface table
18 address resolution table
19 BGP processing unit
20 topology information storage unit

## Claims

1. A control apparatus, comprising:
a route information storage unit (11) configured to store route information for obtaining, for each destination, a neighbouring router set as a next hop for said destination;
a path calculation unit (12) configured to calculate a path between arbitrary control target nodes on the basis of a network topology configured by a plurality of control target nodes; and
a plurality of control information creation units (14-1 to 14-N) configured to create control information to be set in the plurality of control target nodes,
wherein, each of the plurality of control information creation units (14-1 to 14-N) is configured to:
obtain a destination from the route information storage unit (11);
determine whether the destination is allocated to the control information creation unit (14-1 to 14-N);
create, upon determining that the destination is a destination allocated to the control information creation unit (14-1 to 14-N) control information for causing at least one control target node on a path acquired by the control information creation unit (14-1 to 14-N) to forward packets to a second control target node connected to the neighbouring router set as the next hop of the destination by using the path, wherein the path is calculated by the path calculation unit (12);
wherein the control information includes match conditions and an action, and wherein information about the destination is set as the match conditions, and wherein an instruction for outputting packets from an interface connected to the next control target node on the corresponding path is set as the action ;
set the control information in the relevant control target nodes.

2. The control apparatus according to claim 1;
wherein at least one neighbouring router is allocated to each of the control information creation units (14-1 to 14-N); and
wherein, said each of control information creation units (14-1 to 14-N) determines whether or not a destination obtained from the route information storage unit (11) is a destination allocated to itself depending on whether or not that the obtained destination corresponds to a neighbouring router allocated to the control information creation unit.

3. The control apparatus according to claim 1, comprising:
an interface information storage unit in which information about the neighbouring router stored in the route information storage unit (11) and information about the control target nodes connected to a neighbouring router are associated with each other;
wherein at least one control target node is allocated to each of the control information creation units (14-1 to 14-N); and
wherein, when said each of control information creation units (14-1 to 14-N) obtains a destination from the route information storage unit (11) and determines that the destination is a destination allocated to itself depending on whether or not that the obtained destination corresponds to a neighbouring router connected to a control target node allocated to the control information creation unit itself.

4. The control apparatus according to claim 3;
wherein the path calculation unit (12) is provided in plurality; and
wherein each of the path calculation units (12) calculates at least one path in which a control target node allocated to itself is set as a sink and provides a control information creation unit to which the control target node is allocated with the path.

5. The control apparatus according to any one of claims 1 to 4;
wherein the path calculation unit (12) selects one of the plurality of control target nodes and calculates a shortest path tree in which the control target node is set as a sink.

6. The control apparatus according to any one of claims 1 to 5;
wherein each of the control information creation units (14-1 to 14-N) creates control information for causing a control target node connected to a neighbouring router set as a next hop to rewrite a destination MAC address to a previously resolved destination MAC address, rewrite a source MAC address to a MAC address allocated to an exit port of the control target node located at the path sink.

7. The control apparatus according to any one of claims 1 to 6, further comprising a border gateway protocol processing unit configured to acquire path information from a router in a neighbouring autonomous system and store the path information in the route information storage unit (11).

8. A communication system, comprising:
a plurality of control target nodes; and
a control apparatus according to any of claims 1 to 7.

9. A control information creation method, implemented by a control apparatus, said control apparatus comprising:
a route information storage unit (11) configured to store route information for obtaining, for each destination, a neighbouring router set as a next hop for said destination;
a path calculation unit (12) configured to calculate a path between arbitrary control target nodes on the basis of a network topology configured by a plurality of control target nodes; and
a plurality of control information creation units (14-1 to 14-N) configured to create control information to be set in the plurality of control target nodes;
said method being performed by each of the plurality of control information creation units, and said method comprising:
obtaining a destination from the route information storage unit (11);
determining whether the destination is allocated to the control information unit;
creating, upon determining that the destination is a destination allocated to the control information creation unit, control information for causing at least one control target node on a path acquired by the control information creation unit (14-1 to 14-N) to forward packets to a second control target node connected to the neighbouring router set as the next hop of the destination by using the path, wherein the path is calculated by the path calculation unit, wherein the control information includes match conditions and an action, and wherein information about the destination is set as the match conditions, and an instruction for outputting packets from an interface connected to the next control target node on the corresponding path is set as the action ;
setting the control information in the relevant control target nodes.

10. A computer program comprising instructions which, when executed by a computer, cause the computer to perform the method of claim 9.

## Patentansprüche

1. Eine Steuervorrichtung, aufweisend:
eine Routeninformationsspeichereinheit (11), die konfiguriert ist, um Routeninformationen zu speichern, um für jedes Ziel einen benachbarten Router zu erhalten, der als nächster Hop für das Ziel eingestellt ist;
eine Pfadberechnungseinheit (12), die konfiguriert ist, um einen Pfad zwischen beliebigen Steuerungszielknoten auf der Grundlage einer Netzwerktopologie zu berechnen, die durch eine Vielzahl von Steuerungszielknoten konfiguriert ist; und
eine Vielzahl von Steuerinformationserzeugungseinheiten (14-1 bis 14-N), die konfiguriert sind, um Steuerinformationen zu erzeugen, die in der Vielzahl von Steuerungszielknoten einzustellen sind,
wobei jede der Vielzahl von Steuerungsinformationserzeugungseinheiten (14-1 bis 14-N) konfiguriert ist, um:
ein Ziel aus der Routeninformationsspeichereinheit (11) zu erhalten;
zu bestimmen, ob das Ziel der Steuerinformationserzeugungseinheit (14-1 bis 14-N) zugeordnet ist;
nach dem Bestimmen, dass das Ziel ein der Steuerinformationserzeugungseinheit (14-1 bis 14-N) zugeordnetes Ziel ist, Steuerinformationen zu erzeugen, um mindestens einen Steuerungszielknoten auf einem von der Steuerinformationserzeugungseinheit (14-1 bis 14-N) erfassten Pfad zu veranlassen, Pakete an einen zweiten Steuerungszielknoten weiterzuleiten, der mit dem benachbarten Router verbunden ist, der als nächster Hop des Ziels unter Verwendung des Pfades festgelegt ist, wobei der Pfad von der Pfadberechnungseinheit (12) berechnet wird;
wobei die Steuerinformationen Übereinstimmungsbedingungen und eine Aktion beinhalten, und wobei Informationen über das Ziel als Übereinstimmungsbedingungen festgelegt sind, und wobei eine Anweisung zum Ausgeben von Paketen von einer Schnittstelle, die mit dem nächsten Steuerungszielknoten auf dem entsprechenden Pfad verbunden ist, als Aktion eingestellt ist;
die Steuerinformationen in den jeweiligen Steuerungszielknoten zu setzen.

2. Die Steuervorrichtung nach Anspruch 1;
wobei mindestens ein benachbarter Router jeder der Steuerinformationserzeugungseinheiten (14-1 bis 14-N) zugeordnet ist; und
wobei jede der Steuerinformationserzeugungseinheiten (14-1 bis 14-N) bestimmt, ob ein aus der Routeninformationsspeichereinheit (11) erhaltenes Ziel ein selbst zugeordnetes Ziel ist oder nicht, abhängig davon, ob das erhaltene Ziel einem benachbarten Router entspricht oder nicht, der der Steuerinformationserzeugungseinheit zugeordnet ist.

3. Die Steuervorrichtung nach Anspruch 1, aufweisend:
eine Schnittstelleninformationsspeichereinheit, in der Informationen über den benachbarten Router, die in der Routeninformationsspeichereinheit (11) gespeichert sind, und Informationen über die mit einem benachbarten Router verbundenen Steuerungszielknoten miteinander verbunden sind;
wobei mindestens ein Steuerungszielknoten jeder der Steuerinformationserzeugungseinheiten (14-1 bis 14-N) zugeordnet ist; und
wobei, wenn jede der Steuerinformationserzeugungseinheiten (14-1 bis 14-N) ein Ziel von der Routeninformationsspeichereinheit (11) erhält und bestimmt, dass das Ziel ein selbst zugeordnetes Ziel ist, abhängig davon, ob das erhaltene Ziel einem benachbarten Router entspricht oder nicht, der mit einem Steuerungszielknoten verbunden ist, der der Steuerinformationserzeugungseinheit selbst zugeordnet ist.

4. Die Steuervorrichtung nach Anspruch 3;
wobei die Pfadberechnungseinheit (12) in Vielzahl vorgesehen ist; und
wobei jede der Pfadberechnungseinheiten (12) mindestens einen Pfad berechnet, in dem ein sich selbst zugeordneter Steuerungszielknoten als Senke eingestellt ist und eine Steuerinformationserzeugungseinheit bereitstellt, der der Steuerungszielknoten mit dem Pfad zugeordnet ist.

5. Die Steuervorrichtung nach einem der Ansprüche 1 bis 4;
wobei die Pfadberechnungseinheit (12) einen der Vielzahl von Steuerungszielknoten auswählt und einen kürzesten Pfadbaum berechnet, in dem der Steuerungszielknoten als Senke eingestellt ist.

6. Die Steuervorrichtung nach einem der Ansprüche 1 bis 5;
wobei jede der Steuerinformationserzeugungseinheiten (14-1 bis 14-N) Steuerinformationen erzeugt, um einen Steuerungszielknoten zu veranlassen, der mit einem benachbarten Router verbunden ist, der als nächster Schritt eine Ziel-MAC-Adresse in eine zuvor aufgelöste Ziel-MAC-Adresse umzuschreiben, eine Quell-MAC-Adresse in eine MAC-Adresse umzuschreiben, die einem Ausgangsport des Steuerungszielknotens zugeordnet ist, der sich an der Pfadsenke befindet.

7. Die Steuervorrichtung nach einem der Ansprüche 1 bis 6, ferner aufweisend eine Grenzgateway-Protokollverarbeitungseinheit, die konfiguriert ist, um Pfadinformationen von einem Router in einem benachbarten autonomen System zu erfassen und die Pfadinformationen in der Routeninformationsspeichereinheit (11) zu speichern.

8. Ein Kommunikationssystem, aufweisend:
eine Vielzahl von Steuerungszielknoten; und
eine Steuervorrichtung nach einem der Ansprüche 1 bis 7.

9. Ein Steuerinformationserzeugungsverfahren, implementiert durch eine Steuervorrichtung, wobei die Steuervorrichtung aufweist:
eine Routeninformationsspeichereinheit (11), die konfiguriert ist, um Routeninformationen zu speichern, um für jedes Ziel einen benachbarten Router zu erhalten, der als nächster Hop für das Ziel eingestellt ist;
eine Pfadberechnungseinheit (12), die konfiguriert ist, um einen Pfad zwischen beliebigen Steuerungszielknoten auf der Grundlage einer Netzwerktopologie zu berechnen, die durch eine Vielzahl von Steuerungszielknoten konfiguriert ist; und
eine Vielzahl von Steuerinformationserzeugungseinheiten (14-1 bis 14-N), die konfiguriert sind, um Steuerinformationen zu erzeugen, die in der Vielzahl von Steuerungszielknoten einzustellen sind;
wobei das Verfahren von jeder der Vielzahl von Steuerinformationserzeugungseinheiten durchgeführt wird und das Verfahren umfasst:
Erhalten eines Ziels aus der Routeninformationsspeichereinheit (11);
Bestimmen, ob das Ziel der Steuerinformationseinheit zugeordnet ist;
Erzeugen von Steuerinformationen beim Bestimmen, dass das Ziel ein der Steuerinformationserzeugungseinheit zugeordnetes Ziel ist, um zu bewirken, dass mindestens ein Steuerungszielknoten auf einem von der Steuerinformationserzeugungseinheit (14-1 bis 14-N) erfassten Pfad Pakete an einen zweiten Steuerungszielknoten weiterleitet, der mit dem benachbarten Router verbunden ist, der als nächster Hop des Ziels eingestellt ist, indem der Pfad verwendet wird, wobei der Pfad durch die Pfadberechnungseinheit berechnet wird, wobei die Steuerinformationen Übereinstimmungsbedingungen und eine Aktion beinhalten, und wobei Informationen über das Ziel als Übereinstimmungsbedingungen festgelegt werden, und ein Befehl zum Ausgeben von Paketen von einer Schnittstelle, die mit dem nächsten Steuerungszielknoten auf dem entsprechenden Pfad verbunden ist, als Aktion festgelegt wird;
Einstellen der Steuerinformationen in den jeweiligen Steuerungszielknoten.

10. Computerprogramm, umfassend Anweisungen, die, wenn sie von einem Computer ausgeführt werden, den Computer veranlassen, das Verfahren nach Anspruch 9 durchzuführen.

## Revendications

1. Appareil de commande, comprenant :
une unité de mémorisation d'informations de route (11) configurée pour mémoriser des informations de route afin d'obtenir pour chaque destination, un routeur voisin établi comme bond suivant pour ladite destination ;
une unité de calcul de chemin (12) configurée pour calculer un chemin entre des noeuds cibles de commande arbitraires en fonction d'une topologie de réseau configurée par une pluralité de noeuds cibles de commande ; et
une pluralité d'unités de création d'informations de commande (14-1 à 14-N) configurée pour créer des informations de commande à établir dans la pluralité de noeuds cibles de commande,
dans lequel, chacune de la pluralité d'unités de création d'informations de commande (14-1 à 14-N) est configurée pour :
obtenir une destination à partir de l'unité de mémorisation d'informations de route (11) ;
déterminer que la destination est allouée ou non à l'unité de création d'informations de commande (14-1 à 14-N) ;
créer, à la détermination que la destination est une destination allouée à l'unité de création d'informations de commande (14-1 à 14-N), des informations de commande pour amener au moins un noeud cible de commande sur un chemin acquis par l'unité de création d'informations de commande (14-1 à 14-N) à acheminer des paquets vers un second noeud cible de commande connecté au routeur voisin établi comme le bond suivant de la destination en utilisant le chemin, le chemin étant calculé par l'unité de calcul de chemin (12) ;
dans lequel les informations de commande comportent des conditions de correspondance et une action, et dans lequel des informations relatives à la destination sont établies comme les conditions de correspondance, et dans lequel une instruction de production en sortie de paquets depuis une interface connectée au noeud cible de commande suivant sur le chemin correspondant est établie comme l'action ;
établir les informations de commande dans les noeuds cibles de commande pertinents.

2. Appareil de commande selon la revendication 1 ;
dans lequel au moins un routeur voisin est alloué à chacune des unités de création d'informations de commande (14-1 à 14-N) ; et
dans lequel, ladite chacune des unités de création d'informations de commande (14-1 à 14-N) détermine qu'une destination obtenue à partir de l'unité de mémorisation d'informations de route (11) est ou non une destination allouée à elle-même selon que la destination obtenue correspond ou non à un routeur voisin alloué à l'unité de création d'informations de commande.

3. Appareil de commande selon la revendication 1, comprenant :
une unité de mémorisation d'informations d'interface dans laquelle des informations relatives au routeur voisin mémorisées dans l'unité de mémorisation d'informations de route (11) et des informations relatives aux noeuds cibles de commande connectés à un routeur voisin sont associées les unes aux autres ;
dans lequel au moins un noeud cible de commande est alloué à chacune des unités de création d'informations de commande (14-1 à 14-N) ; et
dans lequel, quand ladite chacune des unités de création d'informations de commande (14-1 à 14-N) obtient une destination à partir de l'unité de mémorisation d'informations de route (11) et détermine que la destination est une destination allouée à elle-même selon que la destination obtenue correspond ou non à un routeur voisin connecté à un noeud cible de commande alloué à l'unité de création d'informations de commande elle-même.

4. Appareil de commande selon la revendication 3 ;
dans lequel l'unité de calcul de chemin (12) est fournie dans une pluralité ; et
dans lequel chacune des unités de calcul de chemin (12) calcule au moins un chemin dans lequel un noeud cible de commande alloué à elle-même est établi comme destinataire et fournit une unité de création d'informations de commande à laquelle le noeud cible de commande est alloué avec le chemin.

5. Appareil de commande selon l'une quelconque des revendications 1 à 4 ;
dans lequel l'unité de calcul de chemin (12) sélectionne un de la pluralité de noeuds cibles de commande et calcule une arborescence de chemin le plus court dans laquelle le noeud cible de commande est établi comme destinataire.

6. Appareil de commande selon l'une quelconque des revendications 1 à 5 ;
dans lequel chacune des unités de création d'informations de commande (14-1 à 14-N) crée des informations de commande pour amener un noeud cible de commande connecté à un routeur voisin établi comme bond suivant à réécrire une adresse MAC destinataire en tant qu'adresse MAC destinataire résolue précédemment, réécrire une adresse MAC source en tant qu'adresse MAC allouée à un port de sortie du noeud cible de commande situé au niveau du destinataire du chemin.

7. Appareil de commande selon l'une quelconque des revendications 1 à 6, comprenant en outre une unité de traitement de protocole de passerelle limitrophe configurée pour acquérir des informations de chemin à partir d'un routeur dans un système autonome voisin et mémoriser les informations de chemin dans l'unité de mémorisation d'informations de route (11).

8. Système de communication, comprenant :
une pluralité de noeuds cibles de commande ; et
un appareil de commande selon l'une quelconque des revendications 1 à 7.

9. Procédé de création d'informations de commande, mis en oeuvre par un appareil de commande, ledit appareil de commande comprenant :
une unité de mémorisation d'informations de route (11) configurée pour mémoriser des informations de route afin d'obtenir pour chaque destination, un routeur voisin établi comme bond suivant pour ladite destination ;
une unité de calcul de chemin (12) configurée pour calculer un chemin entre des noeuds cibles de commande arbitraires en fonction d'une topologie de réseau configurée par une pluralité de noeuds cibles de commande ; et
une pluralité d'unités de création d'informations de commande (14-1 à 14-N) configurée pour créer des informations de commande à établir dans la pluralité de noeuds cibles de commande,
ledit procédé étant réalisé par chacune de la pluralité d'unités de création d'informations de commande et ledit procédé comprenant :
l'obtention d'une destination à partir de l'unité de mémorisation d'informations de route (11) ;
la détermination que la destination est allouée ou non à l'unité de création d'informations de commande ;
la création, à la détermination que la destination est une destination allouée à l'unité de création d'informations de commande, d'informations de commande pour amener au moins un noeud cible de commande sur un chemin acquis par l'unité de création d'informations de commande (14-1 à 14-N) à acheminer des paquets vers un second noeud cible de commande connecté au routeur voisin établi comme le bond suivant de la destination en utilisant le chemin, le chemin étant calculé par l'unité de calcul de chemin, dans lequel les informations de commande comportent des conditions de correspondance et une action, et dans lequel des informations relatives à la destination sont établies comme les conditions de correspondance, et une instruction de production en sortie de paquets depuis une interface connectée au noeud cible de commande suivant sur le chemin correspondant est établie comme l'action ;
l'établissement des informations de commande dans les noeuds cibles de commande pertinents.

10. Programme informatique comprenant des instructions qui, à leur exécution par un ordinateur, amènent l'ordinateur à réaliser le procédé selon la revendication 9.
